# EUROPEAN PATENT APPLICATION

(11) **EP 4 174 824 A1**
(43) Date of publication of application: **03.05.2023**
(21) Application number: 21828112.9
(22) Date of filing: 25.06.2021
(51) Int. Cl.: G09B 9/08, G09B 9/32, G09B 9/34, G09B 9/46, G06T 19/00

(54) **AIRCRAFT VR TRAINING SYSTEM, AIRCRAFT VR TRAINING METHOD, AND AIRCRAFT VR TRAINING PROGRAM**

(30) Priority: 26.06.2020 JP 2020110965
(71) Applicant: KAWASAKI JUKOGYO KABUSHIKI KAISHA, Kobe-shi, Hyogo 650-8670 (JP)
(72) Inventor: KOMATSU, Seiji, Chuo-ku, Kobe-shi, Hyogo 6508670 (JP); MURATA, Yoshio, Chuo-ku, Kobe-shi, Hyogo 6508670 (JP); KOBAYASHI, Takumi, Chuo-ku, Kobe-shi, Hyogo 6508670 (JP); KURACHI, Osamu, Chuo-ku, Kobe-shi, Hyogo 6508670 (JP); NISHIMURA, Hirofumi, Chuo-ku, Kobe-shi, Hyogo 6508670 (JP); SHIMIZU, Yuichi, Chuo-ku, Kobe-shi, Hyogo 6508670 (JP); KAWABE, Yuji, Chuo-ku, Kobe-shi, Hyogo 6508670 (JP); KONDO, Hiroki, Chuo-ku, Kobe-shi, Hyogo 6508670 (JP); SHINKAI, Soma, Chuo-ku, Kobe-shi, Hyogo 6508670 (JP)
(74) Representative: Puschmann Borchert Kaiser Klettner Patentanwälte Partnerschaft mbB
(86) International application number: PCT/JP2021/024237
(87) International publication number: WO 2021/261593

(57) **Abstract**

An aircraft VR training system 100 includes: training terminals 1 that generates simulation images for performing simulation training in common VR space and provides the simulation images to trainees 9 individually associated with the training terminals 1; and a setting terminal 6 including setting information necessary for generating the simulation images. The setting terminal 6 transmits the setting information to the training terminals 1. The training terminals 1 set the setting information received from the setting terminal 6, and transmit setting completion notification of the setting information to the setting terminal 6. When the setting terminal 6 receives the completion notification from all the training terminals 1, the setting terminal 6 causes the training terminals 1 to start simulation training.

## Description

### FIELD

The technique disclosed here relates to an aircraft VR training system, an aircraft VR training method, and an aircraft VR training program.

### BACKGROUND

A system with which users perform VR experience in common virtual reality (VR) space. Patent Document 1, for example, discloses a system with which players play a game in common VR space. In this system, in starting a game, initial setting such as loading of saved data for each player and initial placement of an operating character of each player is performed.

### CITATION LIST

### PATENT DOCUMENT

Patent Document 1: Japanese Patent Application Publication No. 2019-80743

### SUMMARY

### TECHNICAL PROBLEM

Utilization of VR space for training is expected to enable high reality training at low cost. For example, in the case of training in an aircraft, training using an actual aircraft involves real danger as well as costs. Only for flight training, training using, for example, a simulator of an aircraft is conceivable, but it is difficult to implement, for example, descent training or other training in cooperation with flight training by using a simulator or other devices. Similarly, only for the descent training, training using a facility on the ground is conceivable, but cooperation between, for example, descent training and flight training is difficult to implement. On the other hand, utilization of VR space flexibly implements various cooperative trainings.

In the case of performing training using VR space, however, initial setting for generating VR space in accordance with training contents is needed. If each trainee makes initial setting, the trainee can predict training contents, and thus, effective training might not be performed.

It is therefore an object of the technique disclosed here to smoothly start training using VR space with enhanced training effects.

An aircraft VR training system disclosed here includes: training terminals that generates simulation images for simulation training in common VR space and provide the simulation images to trainees individually associated with the training terminals; and a setting terminal including setting information for the simulation images, wherein the setting terminal transmits the setting information to the training terminals, the training terminals set the setting information received from the setting terminal and transmit setting completion notification of the setting information to the setting terminal, and when the setting terminal receives the completion notification from all the training terminals, the setting terminal causes the training terminals to start the simulation training.

An aircraft VR training method disclosed here is an aircraft VR training method for simulation training in which trainees individually associated with training terminals use simulation images in common VR space generated by the training terminals, and the method includes: transmitting setting information for the simulation images, the setting information being held by a setting terminal, from the setting terminal to the training terminals; setting the setting information by the training terminals, the setting information being received by the training terminals from the setting terminal; transmitting, by the training terminals, setting completion notification of the setting information to the setting terminal; and starting the simulation training by the training terminals when the setting terminal receives the completion notification from all the training terminals.

An aircraft VR training program disclosed here is an aircraft VR training program for causing a computer of training terminals to execute the function of generating simulation images for simulation training in common VR space and providing the simulation images to trainees individually associated with the training terminals, and the program causes the computer to execute the functions of: setting setting information for the simulation images, the setting information being received from a setting terminal including the setting information; transmitting setting completion notification of the setting information to the setting terminal; and starting the simulation training after receiving start notification of the simulation training from the setting terminal.

An aircraft VR training program disclosed here is a VR training program for causing a computer of a setting terminal to execute the function of causing training terminals that provide simulation images for simulation training in common VR space to trainees individually associated with the training terminals to start the simulation training, and the program causes the computer to execute the functions of: transmitting setting information necessary for generating the simulation images to the training terminals; and transmitting start notification of causing the training terminals to start the simulation training after receiving setting completion notification of the setting information from all the training terminals.

The aircraft VR training system described above can smoothly start training while enhancing training effects.

The aircraft VR training method described above can smoothly start training while enhancing training effects.

The aircraft VR training program described above can smoothly start training while enhancing training effects.

### BRIEF DESCRIPTION OF THE DRAWINGS

[FIG. 1] FIG. 1 is a view illustrating a configuration of a VR training system.
[FIG. 2] FIG. 2 is a schematic drawing illustrating real space where training is performed using the VR training system.
[FIG. 3] FIG. 3 illustrates an example of a helicopter created in VR space.
[FIG. 4] FIG. 4 is a block diagram of training terminals of a pilot and a copilot and peripheral equipment thereof.
[FIG. 5] FIG. 5 is a block diagram of training terminals of a hoist operator and a descender and peripheral equipment thereof.
[FIG. 6] FIG. 6 is a block diagram of a setting terminal and peripheral equipment thereof.
[FIG. 7] FIG. 7 is a flowchart of a training start process of the setting terminal.
[FIG. 8] FIG. 8 is a flowchart of a training start process of a training terminal.
[FIG. 9] FIG. 9 is a flowchart showing a flow of trainings in simulation training.
[FIG. 10] FIG. 10 is an example of a simulation image of a hoist operator in flight training.
[FIG. 11] FIG. 11 is an example of a simulation image of the hoist operator or a descender in descent training.
[FIG. 12] FIG. 12 is an example of a simulation image of a descender in descent training.
[FIG. 13] FIG. 13 is a view illustrating an example of a layout situation in VR space in descent training.
[FIG. 14] FIG. 14 is an example of a simulation image of a copilot in descent training.
[FIG. 15] FIG. 15 is an example of a simulation image of the hoist operator in descent training.
[FIG. 16] FIG. 16 is an example of a simulation image of the descender in rescue training.
[FIG. 17] FIG. 17 is an example of a simulation image of the descender in rescue training.
[FIG. 18] FIG. 18 is an example of a simulation image of the descender in pull-up training.

### DESCRIPTION OF EMBODIMENTS

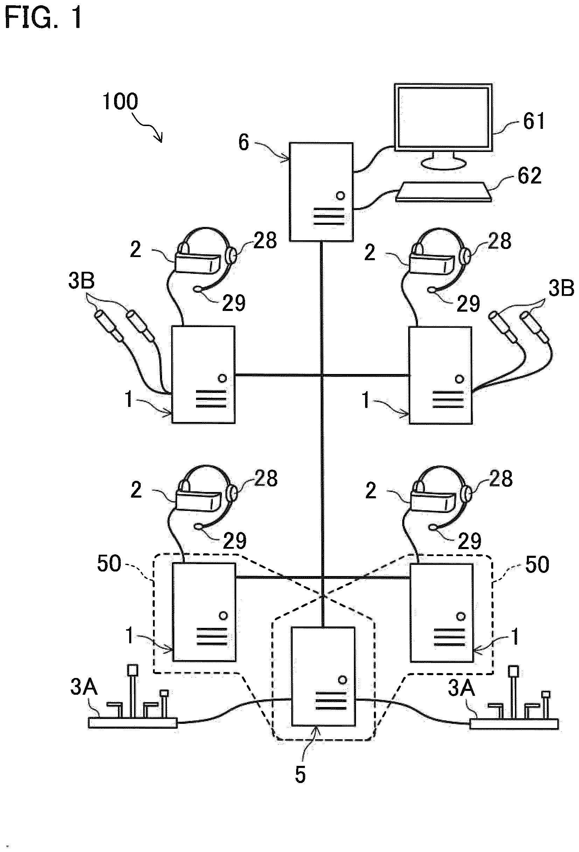

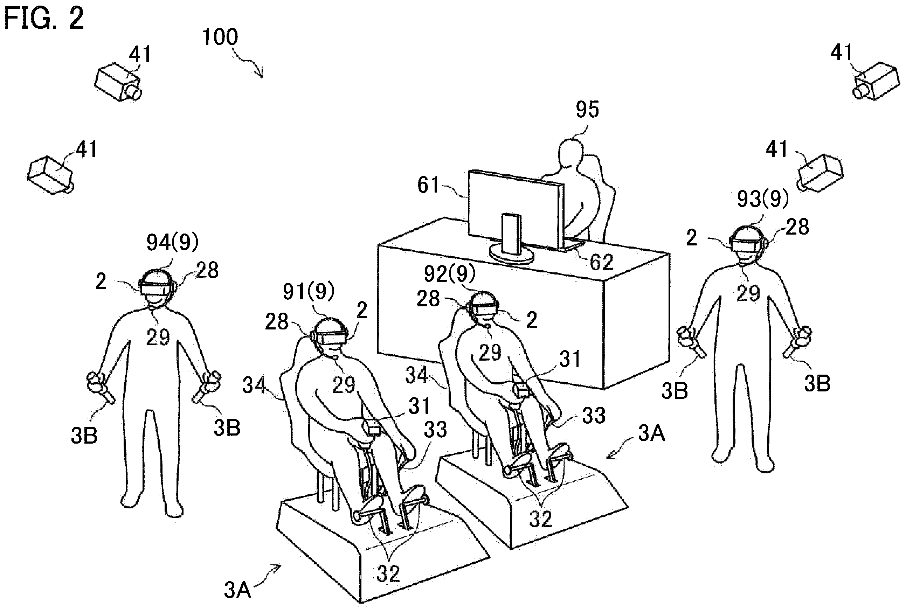

An exemplary embodiment will be described in detail hereinafter with reference to the drawings. FIG. 1 is a view illustrating a configuration of a VR training system 100. FIG. 2 is a schematic drawing illustrating real space where training is performed using the VR training system 100. FIG. 2 does not show terminals.

The VR training system 100 is a system for performing simulation training (hereinafter referred to as "VR training") in common VR space. The VR training system 100 is used for VR training with an aircraft (helicopter in this example). The VR training system 100 generates a simulation image for performing simulation training in common VR space, and includes training terminals 1 that provides a simulation image to associated trainees 9 and a setting terminal 6 including setting information necessary for generating the simulation image. The simulation image is an image forming VR space, and is a so-called VR image. The simulation image includes avatars of the trainees 9 and an airframe of the aircraft.

The training terminals 1 are communicably connected to each other. The training terminals 1 are communicably connected to the setting terminal 6. These terminals are connected to each other by wires through a LAN or the like. The terminals may be wirelessly connected to each other.

The simulation training is cooperative training by the trainees 9 respectively associated with the training terminals 1. In this example, the trainees 9 perform cooperative training with a rescue helicopter in common VR space by using the VR training system 100. The trainees 9 include, for example, a pilot 91, a copilot 92, a hoist operator 93, and a descender 94. When the trainees are not distinguished from each other, these trainees will be hereinafter referred to simply as "trainees 9." The cooperative training is training performed by the trainees 9 in cooperation. For example, the cooperative training is training in which the trainees 9 operate a helicopter to a point where a rescue requester is present and rescue the rescue requester. The cooperative training includes flight of the helicopter by the pilot 91 from a start point to a place of the rescue requester, piloting assist and safety check by, for example, the copilot 92 during flight, and descending and pull-up by the hoist operator 93 and the descender 94.

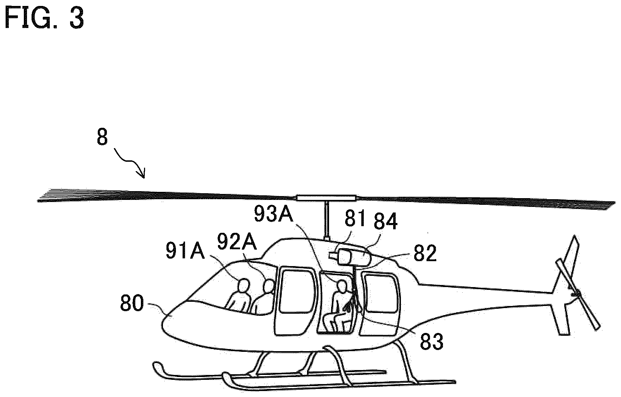

FIG. 3 illustrates an example of the helicopter created in VR space. For example, a helicopter 8 includes an airframe 80, a boom 81 extending from an upper portion of the airframe 80 to the right or left in a cantilever manner, a hoist cable 82 hung from the boom 81, a rescue band 83 coupled to the hoist cable 82, a hoisting machine 84 for hoisting the hoist cable 82, and a pendant-type operator for operating the hoisting machine 84. A pilot avatar 91A that is an avatar of the pilot 91, a copilot avatar 92A that is an avatar of the copilot 92, and a hoist operator avatar 93A that is an avatar of the hoist operator 93 are disposed in the airframe 80. A descender avatar that is an avatar of the descender 94 is basically disposed in the airframe 80

The training terminals 1 is terminals for the trainees 9. One training terminal 1 is allocated to each trainee 9. Each training terminal 1 generates a simulation image for an associated trainee 9. For example, each training terminal 1 generates a simulation image from a first-person viewpoint of the associated trainee 9. That is, the training terminals 1 generate simulation images from different viewpoints in the common VR space. In this example, four training terminals 1 for four trainees 9 are provided.

A VR display device 2 is connected to each of the training terminals 1. The VR display device 2 displays a simulation image generated by the training terminal 1. The VR display device 2 is mounted on the head of the trainee 9. The VR display device 2 is, for example, a head mounted display (HMD). The HMD may be a goggle-shaped device having a display and dedicated for VR, or may be configured by attaching a smartphone or a portable game device to a holder mountable on the head. The VR display device 2 displays a three-dimensional image including an image for the right eye and an image for the left eye. The VR display device 2 may include a headphone 28 and a microphone 29. Each trainee 9 has a conversation with other trainees 9 through the headphone 28 and the microphone 29. The trainee 9 can listen to sound necessary for simulation through the headphone 28.

The VR training system 100 also includes operation devices to be used by the trainees 9 in simulation training. The trainees 9 operate the operation devices depending on training contents. The operation devices are appropriately changed depending on the operation contents of the trainees 9. For example, the VR training system 100 includes a piloting device 3A for the pilot 91 and a piloting device 3A for the copilot 92. The VR training system 100 includes two controllers 3B for the hoist operator 93 and two controllers 3B for the descender 94.

The piloting devices 3A are operated by the trainees 9 who pilot an aircraft in the trainees 9, that is, the pilot 91 or the copilot 92. The piloting devices 3A receive an operation input from the pilot 91 or the copilot 92. Specifically, each piloting device 3A includes a control stick 31, pedals 32, and a collective pitch lever 33 (hereinafter referred to as a "CP lever 33"). Each of the control stick 31, the pedals 32, and the CP lever 33 has a sensor for detecting the amount of operation. Each sensor outputs an operation signal in accordance with the amount of operation. Each piloting device 3A further includes a seat 34. The pilot 91 or the copilot 92 operates the piloting device 3A so that the location and posture of the aircraft in the simulation image, specifically the helicopter 8, is thereby changed. The piloting devices 3A are connected to an airframe calculating terminal 5. That is, operation signals from the control stick 31, the pedals 32, and the CP lever 33 are input to the airframe calculating terminal 5.

The airframe calculating terminal 5 calculates the amount of movement and the amount of change of posture of the aircraft airframe based on the operation input through the piloting devices 3A. The airframe calculating terminal 5 is included in the VR training system 100 in order to reduce calculation loads of the training terminals 1. The airframe calculating terminal 5 is communicably connected to each of the training terminals 1 and the setting terminal 6. The airframe calculating terminal 5 is connected to the training terminals 1 and the setting terminal 6 by wires through a LAN, for example. The airframe calculating terminal 5 may be wirelessly connected to the training terminals 1 and the setting terminal 6.

The airframe calculating terminal 5 transmits movement amount information on the amount of movement and the amount of change of posture of the airframe to at least one of the training terminal 1 of the pilot 91 and the training terminal 1 of the copilot 92. The training terminal 1 that has received the movement amount information calculates a position and a posture of the airframe 80 in the VR space based on the movement amount information. That is, the airframe calculating terminal 5 and the training terminal 1 receiving the movement amount information configure an airframe terminal 50 that calculates a position and a posture of the airframe 80 of the aircraft in the VR space based on an operation input through the piloting device 3A.

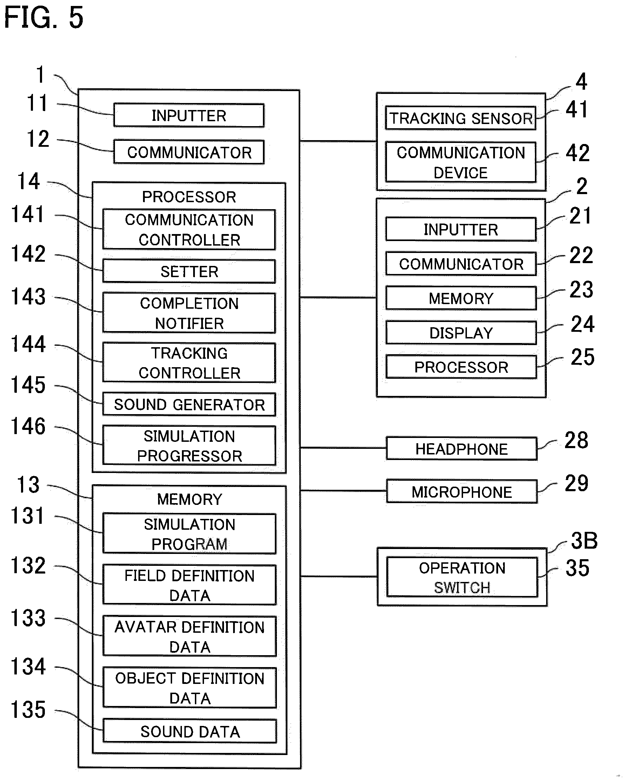

The controllers 3B are portable devices. Each of the trainees 9 (i.e., the hoist operator 93 and the descender 94) carries the controllers 3B with the right hand and the left hand, respectively. Each of the controllers 3B has a motion tracker function. That is, the controllers 3B are sensed by a tracking system 4 described later. Each of the controllers 3B includes an operation switch 35 (see FIG. 5) that receives an input from the trainee 9. The operation switch 35 outputs an operation signal in response to the input from the trainee 9. The controller 3B is connected to the training terminal 1 of the hoist operator 93 or the descender 94. That is, an operation signal from the operation switch 35 is input to the training terminal 1 of the associated hoist operator 93 or descender 94.

The setting terminal 6 receives an input of setting information from an administrator (e.g., instructor) authorized to perform initial setting. The setting terminal 6 sets the input setting information as initial setting. The setting terminal 6 transmits the setting information to the training terminals 1, and also transmits start notification of simulation training to the training terminals 1. The setting terminal 6 displays a simulation image in training. It should be noted that in this embodiment, the setting terminal 6 generates no simulation image. The setting terminal 6 obtains and displays simulation images generated by the training terminals 1. Accordingly, a person (e.g., instructor) other than the trainees 9 can monitor simulation of training. The setting terminal 6 may obtain information from the training terminals 1 and generate a simulation image of each trainee 9.

The VR training system 100 also includes the tracking system 4. The tracking system 4 detects motions of the trainees 9 in the real space. The tracking system 4 senses the VR display device 2 and the controllers 3B. The tracking system 4 is an outside-in tracking system in this example.

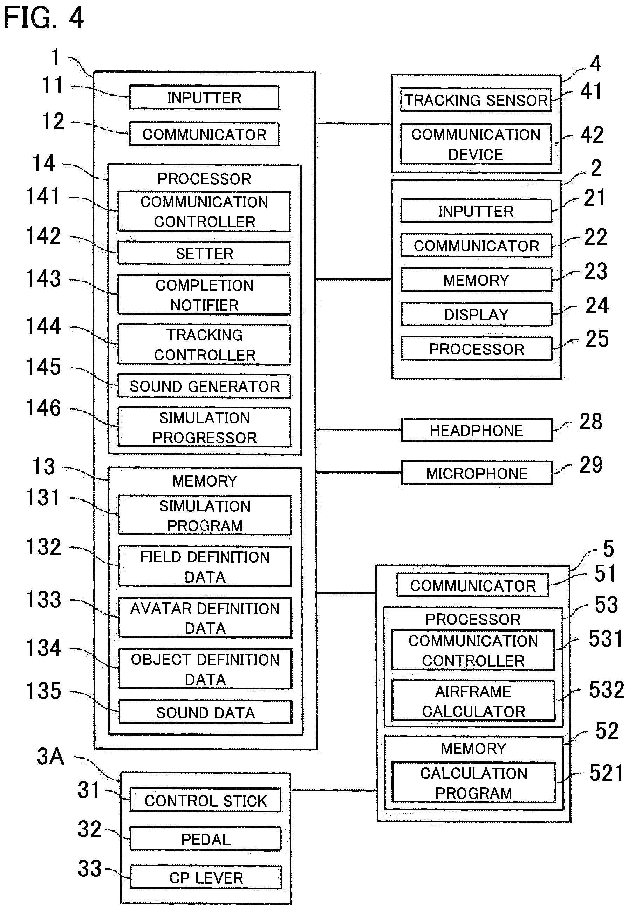

Specifically, the tracking system 4 includes tracking sensors 41, and a communication device 42 (see FIGS. 4 and 5) that receives signals from the tracking sensors 41. The tracking sensors 41 are, for example, cameras. The tracking sensors 41 are disposed to take pictures of real space including the trainees 9 in stereo. Each of the VR display device 2 and the controllers 3B has a luminescent tracking marker. The tracking sensors 41 take photographs of tracking markers of the VR display device 2 and the controllers 3B in stereo.

The tracking system 4 are common to the trainees 9. That is, the common tracking system 4 senses, that is, tracks, the VR display devices 2 and the controllers 3B of the trainees 9.

Image data taken by the tracking sensors 41 is transmitted to the communication device 42. The communication device 42 transmits the received image data to the training terminals 1. The communication device 42 is, for example, a cable modem, a soft modem, or a wireless modem.

Each of the training terminals 1 obtains a position and a posture of an avatar of the associated trainee 9 in the VR space by performing image processing on the image data from the tracking system 4.

In addition, each of the training terminals 1 of the hoist operator 93 and the descender 94 performs data processing on the image data from the tracking system 4 to thereby obtain positions and postures of the hands of the avatar of the associated trainee 9 in the VR space based on the tracking markers of the controllers 3B of the associated trainee 9.

FIG. 4 is a block diagram of the training terminals 1 of the pilot 91 and the copilot 92 and peripheral equipment thereof.

The training terminals 1 of the pilot 91 and the copilot 92 are connected to the VR display device 2, the airframe calculating terminal 5, and the tracking system 4. The piloting devices 3A are connected to the airframe calculating terminal 5.

Each of the training terminals 1 includes an inputter 11, a communicator 12, a memory 13, and a processor 14.

The inputter 11 receives operation inputs from the trainee 9. The inputter 11 outputs an input signal in accordance with the operation input to the processor 14. For example, the inputter 11 is a keyboard, a mouse, or a touch panel operated by pressing a liquid crystal screen or the like.

The communicator 12 is an interface that communicates with, for example, other terminals. For example, the communicator 12 is a cable modem, a soft modem, or a wireless modem. A communicator 22, a communicator 51, and a communicator 63 described later are also configured in a manner similar to the communicator 12. The communicator 12 implements communication with other terminals, such as other training terminals 1, the airframe calculating terminal 5, and the setting terminal 6.

The memory 13 is a storage medium that stores programs and various types of data and is readable by a computer. The memory 13 is a magnetic disk such as a hard disk, an optical disk such as a CD-ROM or a DVD, or a semiconductor memory. A memory 52 and a memory 64 described later are configured in a manner similar to the memory 13.

The memory 13 stores a simulation program 131, field definition data 132, avatar definition data 133, object definition data 134, and sound data 135, for example.

The simulation program 131 is a program for causing a computer, that is, the processor 14, to implement the functions of generating a simulation image for simulation training in the common VR space and providing the simulation image to the associated trainee 9. The simulation program 131 is read and executed by the processor 14.

The field definition data 132 defines a field where training is performed. For example, the field definition data 132 defines a range of the field, a geographic features of the field, and objects such as an obstacle in the field. The field definition data 132 is prepared for each type of field where training is performed.

The avatar definition data 133 defines an avatar of a self (hereinafter referred to as a "self avatar") and an avatar of other trainees 9 (hereinafter referred to as "other avatars or another avatar"). The avatar definition data 133 is prepared for each type of avatar. The avatar definition data 133 of the self avatar includes not only CG data (e.g., polygon data) of the self avatar but also initial position information (information on an initial position and an initial posture in the VR space).

The position information (including initial position information) of an avatar herein includes position coordinates (x, y, z) of three orthogonal axes in the VR space as positional information, and includes rotation angles (Φ, θ, ψ) about the axes as posture information. The same holds for position information of an object such as the airframe 80 of the helicopter 8 described later.

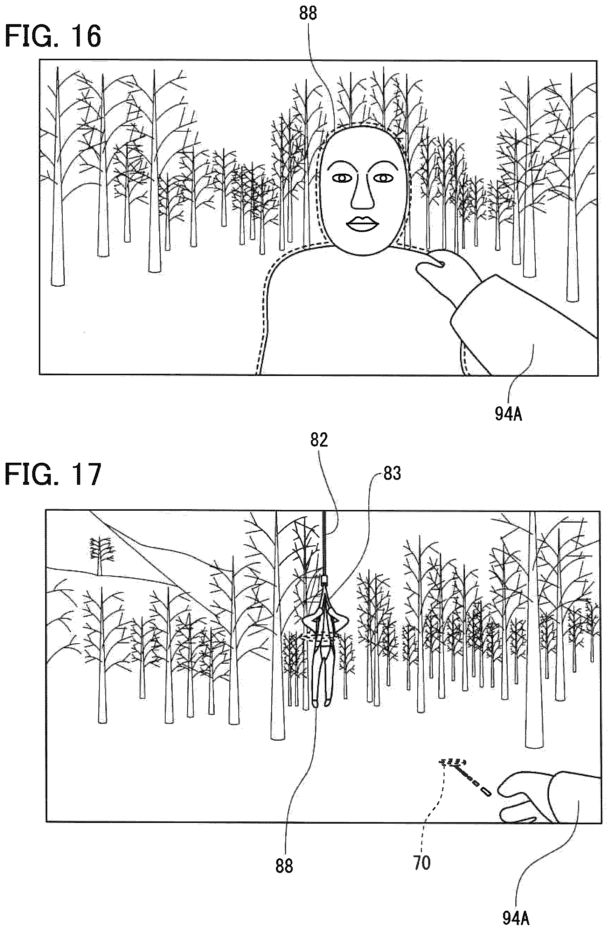

The object definition data 134 defines objects necessary for training. The object definition data 134 is prepared for each type of object. For example, the object definition data 134 is prepared for the airframe 80 of the helicopter 8, the boom 81, the hoist cable 82, the rescue band 83, the hoisting machine 84, the pendant-type operator, a rescue requester 88 (see FIGS. 16 and 17), the ground surface, and so forth.

The sound data 135 is data on sound effects such as flight sound of a helicopter during simulation.

The processor 14 includes processors such as a central processing unit (CPU), a graphics processing unit (GPU), and/or a digital signal processor (DSP), and semiconductor memories such as a VRAM, a RAM, and/or a ROM. A processor 25, a processor 53, and a processor 65 are configured in a manner similar to the processor 14.

The processor 14 reads and executes programs stored in the memory 13 to thereby collectively control parts of the training terminals 1 and implement functions for providing simulation images. Specifically, the processor 14 includes a communication controller 141, a setter 142, a completion notifier 143, a tracking controller 144, a sound generator 145, and a simulation progressor 146 as functional blocks.

The communication controller 141 performs a communication process with an external terminal or a device through the communicator 12. The communication controller 141 performs data processing on data communication.

The setter 142 receives setting information on generation of the simulation image from the setting terminal 6, and sets setting information. The setter 142 sets various types of setting information as initial setting.

When setting of setting information by the setter 142 is completed, the completion notifier 143 transmits a setting completion notification of the setting information to the setting terminal 6.

The tracking controller 144 calculates a position and a posture of a self avatar that is an avatar of the associated trainee 9 in the VR space based on a detection result of the tracking system 4. The tracking controller 144 performs various calculation processes regarding tracking based on image data from the tracking sensors 41 input through the communication device 42. Specifically, the tracking controller 144 performs image processing on the image data to thereby track the tracking marker of the VR display device 2 of the associated trainee 9 and obtain the position and the posture of the trainee 9 in the real space. From the position and the posture of the trainee 9 in the real space, the tracking controller 144 obtains a position and a posture of the self avatar in the VR space based on a predetermined coordinate relationship. Information on the position and the posture of the self avatar in the VR space obtained by the tracking controller 144 will be referred to as position information. The "position and the posture of the avatar" and ""the position of the avatar" will be hereinafter referred to as the "position and the posture in the VR space" and "the position in the VR space," respectively.

The sound generator 145 reads the sound data 135 from the memory 13, generates sound in accordance with progress of simulation.

The simulation progressor 146 performs various calculation processes regarding progress of simulation. For example, the simulation progressor 146 generates a simulation image. The simulation progressor 146 reads the field definition data 132 and the object definition data 134 from the memory 13 based on initial setting of the setter 142, and generates a simulation image obtained by synthesizing an object image on a field image.

The simulation progressor 146 reads the avatar definition data 133 associated with the self avatar from the memory 13, and synthesizes self avatar (e.g., hands and feet of the self avatar) on the VR space based on position information of the self avatar, thereby generating a simulation image. Regarding the self avatars of the pilot 91 and the copilot 92, a state in which the self avatars are seated on a pilot's seat and a copilot's seat in the VR space may be maintained. That is, in the simulation image, the positions of the self avatars of the pilot 91 and the copilot 92 in the airframe 80 are fixed, and only the heads of the self avatars may move (may turn and tilt). In this case, the simulation progressors 146 of the training terminals 1 of the pilot 91 and the copilot 92 may not generate images of the self avatars.

In addition, the simulation progressor 146 acquires position information of other avatars that are avatars of the trainees 9 associated with other training terminals 1 in the training terminals 1 from the other training terminals 1, and based on the acquired position information, produces the other avatars in the VR space. Specifically, the simulation progressor 146 reads the avatar definition data 133 associated with the other avatars from the memory 13 and, based on the position information of the other avatars acquired from the other training terminals 1, syntheses the other avatars on the VR space to thereby generate a simulation image.

The simulation progressor 146 receives start notification of simulation training from the setting terminal 6, and starts simulation training. That is, the simulation progressor 146 starts training in the simulation image. The simulation progressor 146 controls progress of simulation of cooperative training during simulation training.

Specifically, the simulation progressor 146 calculates a position of a posture of the airframe 80 in the VR space based on movement amount information from the airframe calculating terminal 5 described later (information on the amount of movement and the amount of change of posture of the airframe in response to an operation input of the piloting device 3A). The simulation progressor 146 converts the amount of movement and the amount of change of posture of the airframe from the airframe calculating terminal 5 to the amount of movement and the amount of change of posture of the airframe 80 in a coordinate system of the VR space, and calculates a position and a posture of the airframe 80 in the VR space. Accordingly, in accordance with the operation inputs from the piloting devices 3A, the helicopter 8 moves, that is, flies, in the VR space.

The calculation of the position and the posture of the airframe 80 in the VR space is executed by one of the training terminals 1 of the pilot 91 and the copilot 92 in which the piloting function of the airframe is effective. Which one of the training terminals 1 of the pilot 91 and the copilot 92 in which the piloting function is effective is switchable. In general, the piloting function of the training terminal 1 of the pilot 91 is set to be effective. In some cases, the piloting function of the training terminal 1 of the copilot 92 is set to be effective depending on the training situation.

The simulation progressor 146 causes the self avatar to move in the VR space based on position information from the tracking controller 144, and causes other avatars to move in the VR space based on position information of the other avatars received from the other training terminals 1. In a case where the self avatars of the pilot 91 and the copilot 92 are fixed at the pilot's seat and the copilot's seat in the VR space, only the heads of the self avatars move (turn and tilt). It should be noted that the self avatars of the pilot 91 and the copilot 92 do not necessarily move only in the heads, and may move in the VR space based on position information from the tracking controller 144 in a manner similar to the other avatars.

In addition, the simulation progressor 146 changes a position or an angle of a frame of a simulation image to be displayed in accordance with the change of orientation of the head of the pilot 91 or the copilot 92 based on position information from the tracking controller 144. The simulation progressor 146 outputs the generated simulation image to the VR display device 2 and the setting terminal 6. At this time, the simulation progressor 146 outputs sound generated by the sound generator 145 to the headphone 28 and the setting terminal 6 when necessary.

The VR display device 2 includes an inputter 21, the communicator 22, a memory 23, a display 24, and a processor 25.

The inputter 21 receives an operation input from the trainee 9. The inputter 21 outputs an input signal in accordance with an operation input to the processor 25. For example, the inputter 21 is an operation button or a slide switch.

The communicator 22 is an interface that implements communication with the training terminal 1.

The memory 23 is a storage medium that stores programs and various types of data and is readable by a computer. The memory 23 is, for example, a semiconductor memory. The memory 23 stores programs and various types of data for causing a computer, that is, the processor 25, to implement functions for displaying a simulation image on the display 24.

The display 24 is, for example, a liquid crystal display or an organic EL display. The display 24 can display an image for the right eye and an image for the left eye.

The processor 25 reads and executes programs stored in the memory 23 to thereby collectively control parts of the VR display device 2 and implement functions for causing the display 24 to display a simulation image.

The airframe calculating terminal 5 includes the communicator 51, the memory 52, and the processor 53. The airframe calculating terminal 5 receives operation signals output from the piloting devices 3A. Specifically, each of the control stick 31, the pedals 32, and the CP lever 33 inputs an operation signal in accordance with the amount of operation and the amount of depression of the switch. The airframe calculating terminal 5 calculates the amount of movement and the amount of change of posture of the airframe in accordance with the amount of operation of the piloting device 3A, and outputs movement amount information.

The communicator 51 is an interface that implements communication with, for example, the training terminal 1.

The memory 52 stores, for example, a calculation program 521. The calculation program 521 is a program for causing a computer, that is, the processor 53, to implement functions for calculating a position and a posture of the airframe 80 of the aircraft in the VR space. The calculation program 521 is read out and executed by the processor 53.

The processor 53 reads and executes programs stored in the memory 52 to thereby collectively control parts of the airframe calculating terminal 5 and implement functions for calculating the amount of movement and the amount of change of posture of the airframe. Specifically, the processor 53 includes a communication controller 531 and an airframe calculator 532 as functional blocks.

The communication controller 531 executes a communication process with, for example, the training terminal 1 through the communicator 51. The communication controller 531 executes data processing on data communication.

The airframe calculator 532 calculates the amount of movement and the amount of change of posture of the airframe based on operation signals from the piloting devices 3A. Specifically, based on operation signals from the control stick 31, the pedals 32, and the CP lever 33, the airframe calculator 532 calculates the amount of movement and the amount of change of posture of the airframe in accordance with the amounts of depression and the amounts of operation of the switches of the control stick 31, the pedals 32, and the CP lever 33. The airframe calculator 532 transmits movement amount information on the calculated amount of movement and the calculated amount of change of posture of the airframe to the training terminal 1.

FIG. 5 is a block diagram of the training terminals 1 of the hoist operator 93 and the descender 94 and peripheral equipment thereof.

The training terminals 1 of the hoist operator 93 and the descender 94 are connected to the VR display device 2, the controllers 3B, and the tracking system 4. Each of the controllers 3B includes an operation switch 35. Operation signals of the operation switches 35 are input to the training terminals 1.

Basic configurations of the training terminals 1 of the hoist operator 93 and the descender 94 are similar to those of the training terminals 1 of the pilot 91 and the copilot 92. It should be noted that processing in the training terminals 1 of the hoist operator 93 and the descender 94 is slightly different from processing in the training terminals 1 of the pilot 91 and the copilot 92 due to the difference in training between the group of the hoist operator 93 and the descender 94 and the group of the pilot 91 and the copilot 92.

Specifically, the tracking controller 144 calculates a position and a posture of the self avatar that is an avatar of the associated trainee 9 in the VR space based on a detection result of the tracking system 4. The tracking controller 144 performs various calculation processes regarding tracking based on image data from the tracking sensors 41 input through the communication device 42. Specifically, the tracking controller 144 performs image processing on the image data to thereby track a tracking marker of the VR display device 2 of the associated trainee 9 and obtain a position and a posture of the trainee 9 in the real space. From the position and posture of the trainee 9 in the real space, the tracking controller 144 obtains a position and a posture of the self avatar based on the predetermined coordinate relationship. In addition, the tracking controller 144 performs image processing on the image data to thereby track the tracking markers of the controllers 3B and obtain positions and postures of the hands of the trainee 9 in the real space. From the positions and the postures of the hands of the trainees 9 in the real space, the tracking controller 144 obtains positions and postures of the hands of the self avatar based on the predetermined coordinate relationship. That is, the tracking controllers 144 of the training terminals 1 of the hoist operator 93 and the descender 94 obtain positions and postures of the self avatars and positions and postures of the hands of the self avatars as position information.

The simulation progressor 146 generates a simulation image and controls progress of simulation of cooperative training in a manner similar to the training terminals 1 of the pilot 91 and the copilot 92. It should be noted that, unlike the pilot 91 and the copilot 92 who remain seated on the pilot's seat and the copilot's, the hoist operator 93 and the descender 94 can move inside and outside the aircraft. Thus, the simulation progressor 146 freely moves the self avatar in the VR space. Based on the position information from the tracking controller 144, the simulation progressor 146 changes a position or an angle of a frame of a simulation image to be displayed in accordance with the change of the position or orientation of the head of the hoist operator 93 or the descender 94. In addition, in response to operation signals from the operation switches 35 of the controllers 3B, the simulation progressor 146 performs processing in accordance with the operation signal to the self avatar in the VR space. The processing in accordance with the operation signal here is, for example, opening/closing of a door of the helicopter 8 or operation of the pendant-type operator.

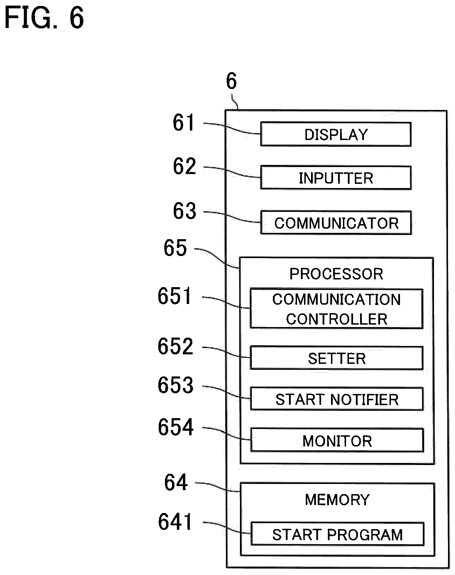

FIG. 6 is a block diagram of the setting terminal 6 and peripheral equipment thereof.

The setting terminal 6 includes a display 61, an inputter 62, the communicator 63, the memory 64, and the processor 65.

The display 61 is, for example, a liquid crystal display, an organic EL display, or a projector and a screen.

The inputter 62 accepts an input operation of an administrator (e.g., instructor) authorized to perform initial setting. The inputter 62 is, for example, a keyboard, a mouse, or a touch panel.

The communicator 63 is an interface that implements communication with, for example, the training terminal 1.

The memory 64 includes a start program 641, for example. The start program 641 is a program for causing a computer, that is, the processor 65, to implement functions for causing the training terminals 1 that provides simulation images for performing simulation training in the common VR space to associated trainees to start simulation training. The start program 641 is read out and executed by the processor 65.

The processor 65 reads and executes programs stored in the memory 64 to thereby collectively control parts of the setting terminal 6 and implement functions for performing initial setting concerning simulation. Specifically, the processor 65 includes a communication controller 651, a setter 652, a start notifier 653, and a monitor 654 as functional blocks.

The communication controller 651 performs a communication process with an external terminal or a device through the communicator 63. The communication controller 651 executes data processing on data communication.

The setter 652 accepts an input of various types of setting information on initial setting necessary for generating a simulation image from a user, and sets the input setting information as initial setting. The setter 652 causes the display 61 to display a setting input screen stored in the memory 64. The setter 652 causes the memory 64 to store setting information input to the setting input screen through the inputter 62 as initial setting. The setter 652 transmits setting information to the training terminals 1.

When the start notifier 653 receives completion notification of setting the setting information from all the training terminals 1, the start notifier 653 transmits start notification for starting simulation training to the training terminals 1. Based on the transmission of the start notification from the start notifier 653 to all the training terminals 1, training starts in the training terminals 1.

The monitor 654 receives a simulation image from each of the training terminals 1. That is, the monitor 654 receives a simulation image in a first-person viewpoint in accordance with each trainee 9. The monitor 654 causes the display 61 to display the simulation image of one of the trainees 9 in a first-person viewpoint. Alternatively, the monitor 654 causes the display 61 to display the simulation images of all the trainees 9 in first-person viewpoints dividedly. In the case where all the simulation images in the first-person viewpoints are displayed dividedly, the monitor 654 may cause the display 61 to display one of the simulation images in the first-person viewpoints in accordance with selection operation through the inputter 62.

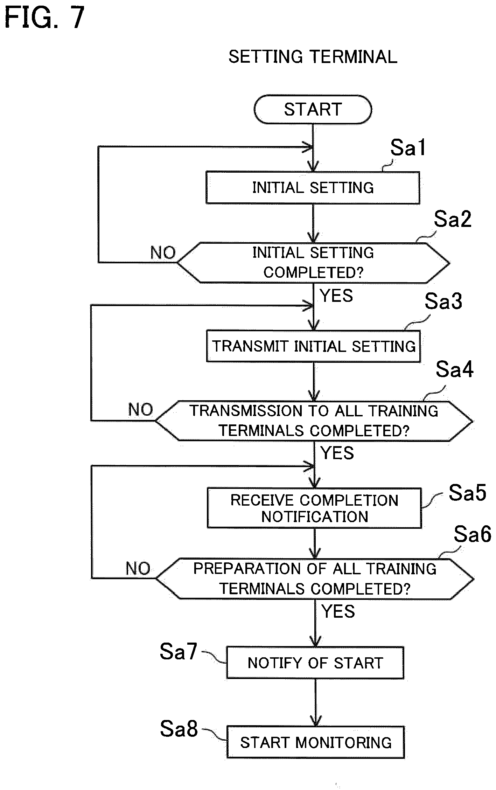

Subsequently, a training start process in the VR training system 100 will be described. FIG. 7 is a flowchart of a training start process of the setting terminal 6.

First, in step Sa1, the processor 65 receives an input of initial setting. Specifically, the setter 652 causes the display 61 to display a setting input screen for initial setting, and receives an input of setting information from an administrator through the inputter 62.

For example, the setter 652 accepts inputs of information specifying the number of terminals to be connected (hereinafter referred to as "terminal number information"), information specifying IP addresses of terminals to be connected (hereinafter referred to as "terminal address information"), information specifying a training field where training simulation is performed (hereinafter referred to as "field information"), information specifying the direction of the boom of the helicopter (i.e., one of the left side and the right side of the helicopter in which the boom extends) (hereinafter referred to as "boom information"), and information specifying a position of a rescue requester in the training field (hereinafter referred to as "rescue requester information"). Based on the terminal number information and the terminal address information, a trainee to participate in training is specified. As the training field, fields such as a mountainous area are prepared. The field information includes a previously set initial position of the helicopter in the training field (i.e., initial position of an origin of a local coordinate system of the helicopter). The terminal number information, the terminal address information, the field information, the boom information, and the rescue requester information are, but not limited to, examples of setting information. The setter 652 sets these items of setting information as initial setting. The initial position of the helicopter may not be included in the field information, and may be input as an item of the setting information.

The processor 65 determines whether initial setting is completed or not in step Sa2. Specifically, the setter 652 determines whether the initial setting is completed or not based on whether the administrator performs operation of input completion through the inputter 62 or not. If the initial setting is not completed, the setter 652 repeats steps Sa1 and Sa2.

When the initial setting is completed, the processor 65 transmits setting information on the initial setting to the training terminals 1 in step Sa3. Specifically, when the setter 652 receives a connection request from the training terminals 1, the setter 652 transmits setting information to the training terminals 1 together with a connection completion response indicating completion of communication establishment. Step Sa3 corresponds to transmitting setting information for the simulation images, the setting information being held by a setting terminal, from the setting terminal to the training terminals.

Thereafter, in step Sa4, the processor 65 determines whether setting information is transmitted to all the training terminals 1 or not. If transmission of the setting information to all the training terminals 1 is completed, the processor 65 proceeds to step Sa5, whereas if transmission of the setting information to all the training terminals 1 is not completed, the processor 65 repeats steps Sa3 and Sa4.

In step Sa5, the processor 65 receives completion notification indicating preparation completion of the training terminals 1 from the training terminals 1.

Subsequently, in step Sa6, the processor 65, specifically the start notifier 653, determines whether the completion notification is received from all the training terminals 1 or not. If completion notification of any one of the training terminals 1 is not received, the start notifier 653 repeats steps Sa5 and Sa6.

If completion notification is received from all the training terminals 1, the start notifier 653 transmits training start notification to all the training terminals 1 in step Sa7. Using this start notification as a trigger, training starts in all the training terminals 1. Steps Sa5 through Sa7 correspond to starting the simulation training by the training terminal when the setting terminal receives the completion notification from all the training terminals.

Thereafter, the processor 65, specifically the monitor 654, causes the display 61 to display a simulation image in the VR space. This enables an administrator such as instructor to monitor cooperative training of trainees 9 while watching the display 61.

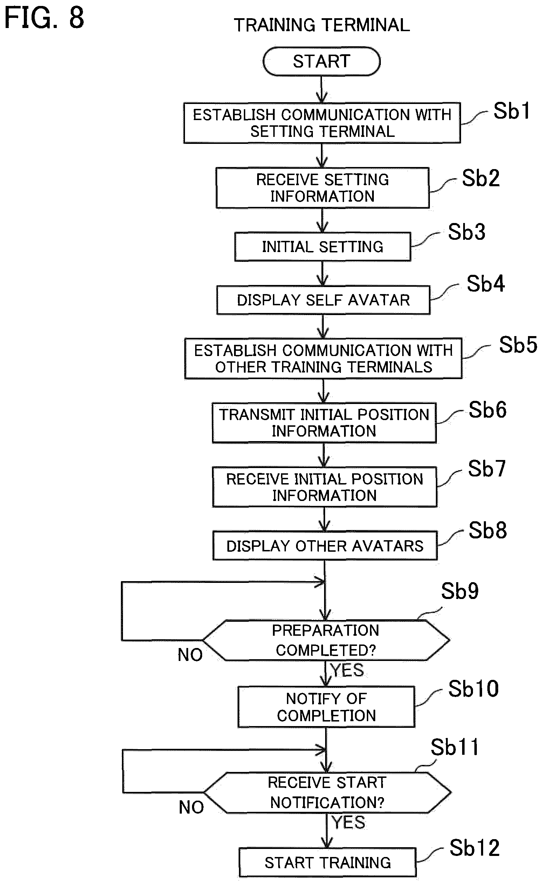

FIG. 8 is a flowchart of a training start process of the training terminal 1. The following training start process is performed independently in each of the training terminals 1.

First, in step Sb1, the processor 14 establishes communication with the setting terminal 6. Specifically, the trainee 9 performs an input requiring connection to the setting terminal 6 through the inputter 11 of the training terminal 1 or the inputter 21 of the VR display device 2. The input requiring connection to the setting terminal 6 may be made based on an operation signal output from the control stick 31, the pedals 32, or the CP lever 33 of the piloting device 3. When the simulation progressor 146 receives an input of connection request to the setting terminal 6, the simulation progressor 146 transmits the connection request to the setting terminal 6. Then, the simulation progressor 146 receives a connection completion response from the setting terminal 6 so that communication with the setting terminal 6 is thereby established.

At this time, the simulation progressor 146 also receives setting information of initial setting from the setting terminal 6 (step Sb2). In step Sb3, the setter 142 sets the received setting information as initial setting of simulation. Steps Sb2 and Sb3 correspond to setting the setting information by the training terminal, the setting information being received by the training terminals from the setting terminal.

When the initial setting is completed, in step Sb4, the simulation progressor 146 reads the field definition data 132, the avatar definition data 133, and the object definition data 134 from the memory 13 based on the initial setting, and generates VR space in which an object image and a self avatar image are synthesized on a field image, thereby generating a simulation image. At this time, in the case of a trainee whose self avatar is present in the airframe 80, initial position information included in the avatar definition data 133 of the self avatar is position information not based on an absolute coordinate system in the VR space but based on a local coordinate system in the airframe 80 having an origin fixed at the airframe 80. That is, the self avatar is displayed at a relative position to the airframe 80 in the VR space.

The simulation progressor 146 outputs, that is, provides, the generated simulation image to the VR display device 2. In response to this, the VR display device 2 displays a simulation image.

Then, in step Sb5, the simulation progressor 146 establishes communication with all the other training terminals 1. Specifically, the trainee 9 performs an input requiring connection to other training terminals 1 through the inputter 11 of the training terminal 1 or the inputter 21 of the VR display device 2. In response to this, the simulation progressor 146 transmits a connection request to the other training terminals 1. Then, the simulation progressor 146 receives connection completion responses from the other training terminals 1 so that communication with the other training terminals 1 is thereby established. The simulation progressor 146 establishes communication with all the other training terminals 1.

One of the training terminals 1 of the pilot 91 and the copilot 92 having an effective piloting function also establishes communication with the airframe calculating terminal 5.

When communication with the other training terminals 1 is established, the simulation progressor 146 transmits initial position information on the self avatar (i.e., position coordinates (x, y, z) and rotation angles (Φ, θ, ψ)) in the VR space to the other training terminals 1 in step Sb6.

Thereafter, in step Sb7, the simulation progressor 146 receives initial position information (i.e., position coordinates (x, y, z) and rotation angles (Φ, θ, ψ)) on other avatars in the VR space from the other training terminals 1.

When the simulation progressor 146 receives the initial position information on the other avatars, the simulation progressor 146 causes the other avatars to be displayed in step Sb8. Specifically, the simulation progressor 146 reads the avatar definition data 133 corresponding to the other avatars from the memory 13, and syntheses the other avatars at initial positions in the VR space generated in step Sb4. At this time, the initial position information of the other avatars in the airframe 80 is position information not based on an absolute coordinate system in the VR space but based on a local coordinate system in the airframe 80 having an origin fixed at the airframe 80. That is, the other avatars are displayed at relative positions to the airframe 80 in the VR space.

Subsequently, in step Sb9, the simulation progressor 146 determines whether preparation of the training terminals 1 is completed or not. For example, when preparation of simulation is completed, each trainee 9 operates the inputter 21 of the VR display device 2 and inputs preparation completion. Preparation of simulation differs among the trainees 9. Preparation of the pilot 91 or the copilot 92 is seating on the seat 34 of the piloting device 3A and mounting of the VR display device 2. Preparation of the hoist operator 93 and the descender 94 is mounting of the VR display device 2 and the controllers 3B. The simulation progressor 146 determines preparation completion of the training terminals 1 by receiving a preparation completion signal from the VR display device 2. The simulation progressor 146 waits until preparation is completed. The trainees 9 may input preparation completion by operating the inputter 11. In this case, the simulation progressor 146 determines preparation completion of the training terminal 1 by receiving a preparation completion signal from the inputter 11.

When preparation is completed, the simulation progressor 146 transmits completion notification indicating preparation completion to the setting terminal 6 in step Sb 10. The preparation includes setting of setting information on initial setting in the training terminal 1. Thus, the completion notification is also setting completion notification of the setting information. Step Sb 10 corresponds transmitting, by the training terminals, setting completion notification of the setting information to the setting terminal.

Thereafter, in step Sb11, the simulation progressor 146 waits for start notification from the setting terminal 6.

When the simulation progressor 146 receives start notification, the simulation progressor 146 starts training simulation in step Sb 12.

In this training start process, setting information necessary for generating simulation images in common VR space is transmitted from the setting terminal 6 to the training terminals 1. Each of the training terminals 1 sets the setting information received from the setting terminal 6 as initial setting, and generates a simulation image in the common VR space. The trainees 9 do not need to perform initial setting in the associated training terminals 1. Thus, prediction of training contents by the trainees 9 is avoided so that training effects can be thereby enhanced.

In addition, in this configuration, it is necessary to wait for training start until setting of setting information is completed in all the training terminals 1. In the VR training system 100, the setting terminal 6 manages checking of setting completion of setting information and a trigger for starting training in all the training terminals 1. Specifically, when setting of setting information is completed, each training terminal 1 transmits completion notification not to all the other training terminals 1 but to the setting terminal 6. The setting terminal 6 determines whether setting of setting information is completed in all the training terminals 1 or not. If setting of setting information is completed in all the training terminals 1, the setting terminal 6 transmits start notification to all the training terminals 1, and training starts. If checking of setting completion and a trigger for starting training in all the training terminals 1 are performed in each of the training terminals 1, transmission and reception of necessary signals increase, and processing becomes complicated. On the other hand, if checking of setting completion and a trigger for starting training in all the training terminals 1 are managed by one terminal, that is, the setting terminal 6, processing to training start can be thereby smoothly performed.

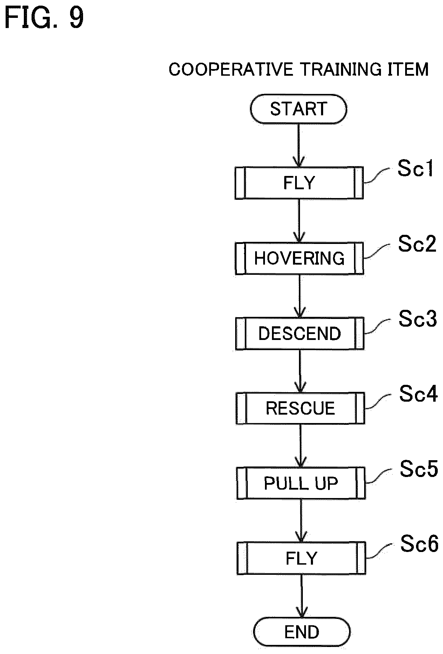

Next, an example of simulation training in the VR training system 100 will be described. This simulation training is cooperative training performed by four trainees 9 (i.e., the pilot 91, the copilot 92, the hoist operator 93, and the descender 94), and the helicopter 8 flies to a point where a rescue requester 88 is present to rescue the rescue requester 88. The piloting function of the training terminal 1 of the pilot 91 is set effective. FIG. 9 is a flowchart showing a flow of training processes in simulation training. This simulation training starts after the training start process described above is completed. Various operations of the piloting devices 3A and the controllers 3B are allocated with various processes depending on training situations. Each training terminal 1 performs a process associated with an operation of the piloting device 3A and the controllers 3B depending on situations in a simulation image.

In the simulation training, first, flight training is performed in step Sc1. The flight training is training of flying the helicopter 8 from a departure point to a point where the rescue requester 88 is present (i.e., rescue point). The pilot 91 flies the helicopter 8 in the simulation image by operating the piloting device 3A. The training terminal 1 of the pilot 91 changes a position and a posture of the airframe 80 in VR space based on a calculation result of the airframe calculating terminal 5.

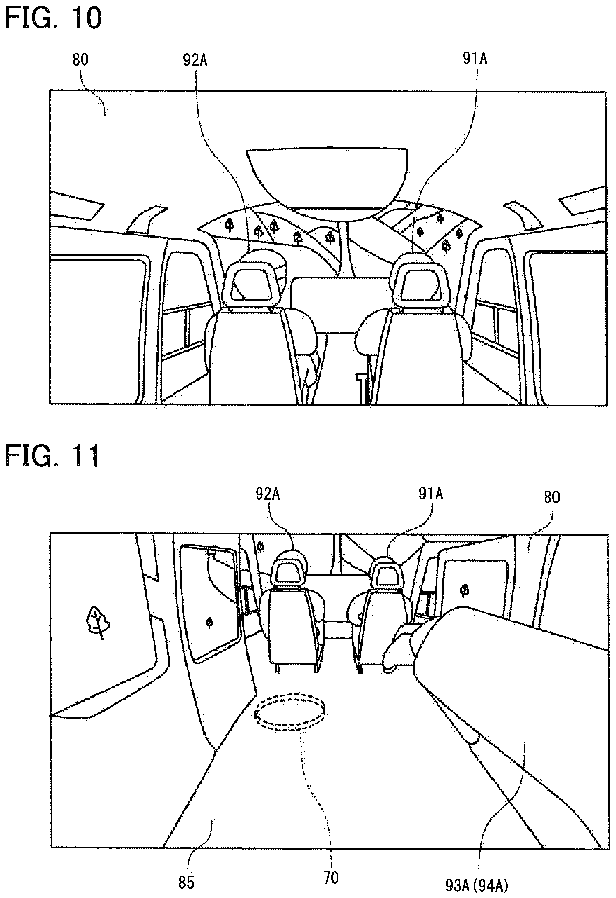

The other training terminals 1 acquires a position and a posture of the airframe 80 calculated by the training terminal 1 of the pilot 91, and generates a simulation image in which the position and the posture of the airframe 80 are updated. The copilot 92, for example, performs safety check during flight while watching the simulation image. For example, FIG. 10 is an example of a simulation image of the hoist operator 93 in flight training. This simulation image is an image in a case where the hoist operator 93 faces the pilot's seat in the airframe 80. This simulation image shows an avatar 91A of the pilot 91 and an avatar 92A of the copilot 92 seated on the pilot's seat and the copilot's seat, respectively.

When the helicopter 8 arrives at the rescue point, flight training is completed.

Next, hovering training in step Sc2 is performed. The hovering training is training for continuously suspending the helicopter 8 at a predetermined position in the air. In this hovering training, a pilot action by the pilot 91 and a safety check action by, for example, the copilot 92 are performed.

When hovering flight is performed with stability, hovering training is completed,

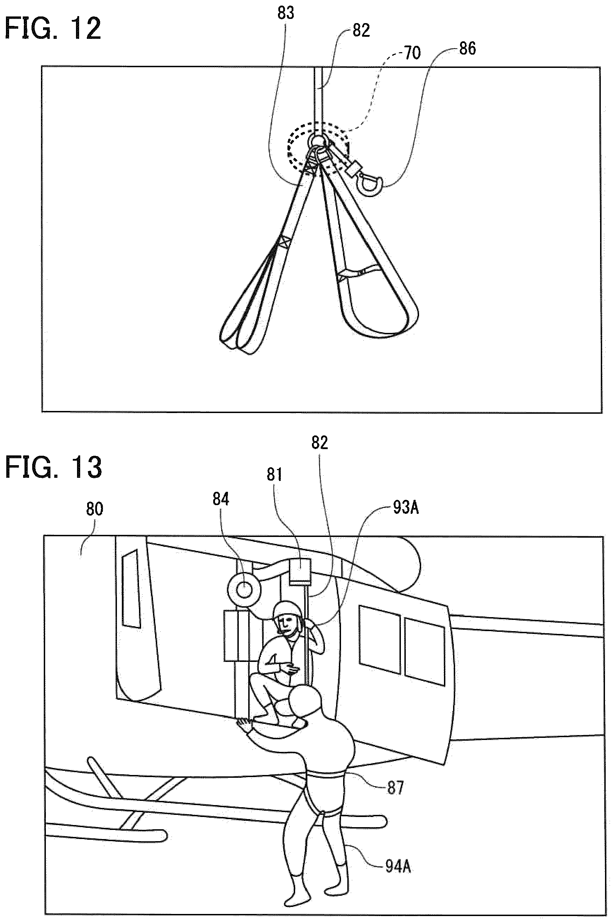

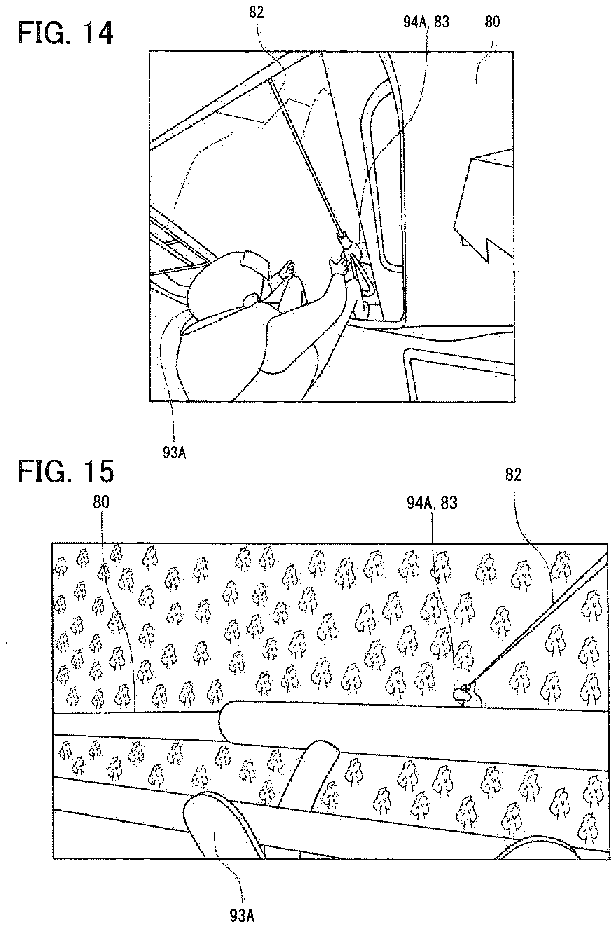

Next, descent training in step Sc3 is performed. FIG. 11 is an example of a simulation image of the hoist operator 93 or the descender 94 in descent training. FIG. 12 is an example of a simulation image of the descender 94 in descent training. FIG. 13 is a view illustrating an example of a layout situation in VR space in descent training. FIG. 14 is an example of a simulation image of the copilot 92 in descent training. FIG. 15 is an example of a simulation image of the hoist operator 93 in descent training.

The descent training is training in which the hoist operator 93 allows the descender 94 to descend from the airframe 80 by operating the hoisting machine 84. That is, after the avatar 94A of the descender 94 is coupled to the hoist cable 82, the hoist operator 93 operates the hoisting machine 84 to allow the avatar 94A of the descender 94 to descend.

For example, in the descent training, the hoist operator 93 and the descender 94 move the self avatars to the vicinity of the door of the airframe 80. This movement of the self avatars is implemented by operation of the controller 3B by the hoist operator 93 or the descender 94. For example, when the hoist operator 93 or the descender 94 presses the operation switch 35 halfway, a pointer 70 is thereby displayed on a floor 85 of the airframe 80 as illustrated in FIG. 11. The hoist operator 93 or the descender 94 adjusts the direction of the controller 3B with the operation switch 35 pressed halfway, thereby adjusting the position of the pointer 70. When the hoist operator 93 or the descender 94 fully presses the operation switch 35, the self avatars can be moved to the position of the pointer 70. In this manner, even if the hoist operator 93 or the descender 94 does not actually move in real space, self avatars thereof can be moved in VR space. The movement of the self avatars may be implemented by actual movement of the hoist operator 93 or the descender 94 in real space.

The display of the pointer 70 on the floor 85 here substantially means selection of a point of an object corresponding to destination of the avatar. Selection of an object on a part of the object is performed by overlaying the pointer 70 on the object on a part of the object in display.

Next, the hoist operator 93 or the descender 94 selects the door of the airframe 80 by the pointer 70 by operating the controller 3B. In this state, when the hoist operator 93 or the descender 94 fully presses the operation switch 35, the door is made open.

As illustrated in FIG. 12, the descender 94 selects a front end of the hoist cable 82 or a vicinity of a carabiner 86 by the pointer 70. In this state, when the descender 94 fully presses the operation switch 35, the carabiner 86 is thereby coupled to a band 87 of the avatar 94A of the descender 94 (see FIG. 13). The avatar 94A of the descender 94 is previously equipped with the band 87 different from the rescue band 83. Accordingly, as illustrated in FIG. 13, the avatar 94A of the descender 94 is coupled to the hoist cable 82, and the avatar 94A of the descender 94 is hung by the hoist cable 82.

At this time, as illustrated in FIG. 14, the copilot 92 checks situations of the avatar 93A of the hoist operator 93 and the avatar 94A of the descender 94, and gives advice on hovering flight to the pilot 91 when necessary.

On the other hand, the hoist operator 93 selects the pendant-type operator by the pointer 70 and fully presses the operation switch 35 in this state, thereby causing the avatar 93A of the hoist operator 93 to hold the pendant-type operator. As illustrated in FIG. 15, the hoist operator 93 moves in the real space in such a manner that the avatar 93A of the hoist operator 93 leans out of the airframe 80. In this manner, the hoist operator 93 can visually recognize the avatar 94A of the descender 94 hung by the hoist cable 82. The hoist operator 93 operates the operation switch 35 with the avatar 93A of the hoist operator 93 holding the pendant-type operator so that the hoist cable 82 is thereby drawn and the avatar 94A of the descender 94 gradually descends.

At this time, the descender 94 performs hand signals (i.e., moves the controllers 3B) in the real space in accordance with a distance to the ground surface in the VR space. Accordingly, the avatar 94A of the descender 94 performs similar hand signals, and notifies the hoist operator 93 of the distance between the avatar 94A of the descender 94 and the ground surface. The hoist operator 93 adjusts the amount of drawing of the hoist cable 82 in accordance with the hand signals of the avatar 94A of the descender 94.

When the avatar 94A of the descender 94 approaches the ground surface, the descender 94 selects a target landing point by the pointer 70. In this state, the descender 94 fully presses the operation switch 35 so that the avatar 94A of the descender 94 is thereby landed on the target landing point. At this time, an action in which the avatar 94A of the descender 94 releases coupling to the hoist cable 82 is omitted, and the avatar 94A of the descender 94 is disconnected from the hoist cable 82. In this manner, descent training is completed.

Subsequently, rescue training in step Sc4 is performed. FIG. 16 is an example of a simulation image of the descender 94 in rescue training. FIG. 17 is an example of a simulation image of the descender 94 in rescue training.

The descender 94 moves the avatar 94A of the descender 94 to the place of the rescue requester 88. In a manner similar to the movement in the airframe 80, this movement is implemented by selection of destination by the pointer 70 and full pressing of the operation switch 35.

In a state where the avatar 94A of the descender 94 moves to the rescue requester 88, the descender 94 presses the operation switch 35 halfway, and if the rescue requester 88 is within a rescuable range, the contour of the rescue requester 88 is colored in display, as illustrated in FIG. 16. The descender 94 adjusts the directions of the controllers 3B, and touches the rescue requester 88 with the hands of the avatar 94A of the descender 94. In this state, when the descender 94 fully presses the operation switch 35, the rescue requester 88 is tied to the rescue band 83 as illustrated in FIG. 17. That is, an action in which the avatar 94A of the descender 94 moves the rescue requester 88 to the position of the rescue band 83 and an action in which the avatar 94A of the descender 94 ties the rescue band 83 to the rescue requester 88 are omitted.

Thereafter, the descender 94 moves the avatar 94A of the descender 94 to the place of the hoist cable 82. This movement has been described above.

In the state where the avatar 94A of the descender 94 has moved to the hoist cable 82, the descender 94 selects the hoist cable 82 by the pointer 70 and fully presses the operation switch 35 so that the avatar 94A of the descender 94 is thereby coupled to the hoist cable 82. In this manner, rescue training is completed.

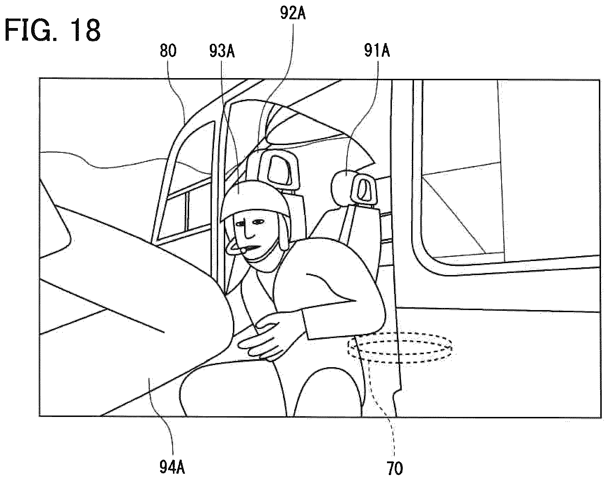

Thereafter, pull-up training in step Sc5 is performed. FIG. 18 is an example of a simulation image of the descender 94 in pull-up training.

The descender 94 performs hand signals to send a signal of pull-up to the hoist operator 93.

The hoist operator 93 checks the hand signals of the avatar 94A of the descender 94, and operates the pendant-type operator to start pull-up of the avatar 94A of the descender 94 and the rescue requester 88. The hoist operator 93 adjusts the pull-up amount of the hoist cable 82 while visually recognizing the avatar 94A of the descender 94.

The descender 94 may send hand signals to the avatar 93A of the hoist operator 93 depending on the pull-up situation. For example, when the hoist cable 82 swings greatly, the descender 94 may send a signal of temporarily stopping pull-up to the avatar 93A of the hoist operator 93. When swing of the hoist cable 82 is stopped, the descender 94 may send a signal of restarting pull-up to the avatar 93A of the hoist operator 93. In this case, the hoist operator 93 temporarily stops pull-up and restarts pull-up, for example, in accordance with the hand signals of the avatar 94A of the descender 94.

As illustrated in FIG. 18, when the avatar 94A of the descender 94 is pulled up to the vicinity of the airframe 80, the descender 94 selects a part of the inside of the airframe 80 with the pointer 70 and fully presses the operation switch 35. Accordingly, the avatar 94A of the descender 94 gets in the airframe 80. Thereafter, the hoist operator 93 selects the rescue band 83 by the pointer 70 and fully presses the operation switch 35. Accordingly, the rescue requester 88 is pulled up into the airframe 80. That is, an action in which the avatar 94A of the descender 94 gets in the airframe 80 and an action in which the avatar 93A of the hoist operator 93, for example, pulls the rescue requester 88 into the airframe 80 are omitted. In this manner, pull-up training is completed.

Thereafter, flight training in step Sc6 is performed. The flight training in step Sc6 is similar to the flight training in step Sc1. This flight training is training of flying the helicopter 8 to the original departure point. The pilot 91 flies the helicopter 8 by operating the piloting devices 3A. The copilot 92, for example, performs safety check during flight. When the helicopter 8 arrives at the original departure point, flight training is finished, and a series of simulation training (cooperative training) is finished.

This simulation training is merely an example, and the contents of the simulation training are not limited to this example.

As described above, the aircraft VR training system 100 includes: training terminals 1 that generates simulation images for performing simulation training in common VR space and provides the simulation images to trainees 9 individually associated with the training terminals 1; and the setting terminal 6 including setting information necessary for generating the simulation images. The setting terminal 6 transmits the setting information to the training terminals 1. The training terminals 1 set the setting information received from the setting terminal 6, and transmit setting completion notification of the setting information to the setting terminal 6. When the setting terminal 6 receives the completion notification from all the training terminals 1, the setting terminal 6 causes the training terminals 1 to start the simulation training.

An aircraft VR training method is an aircraft VR training method for enabling trainees individually associated with the training terminals 1 to perform simulation training by using simulation images in common VR space generated by the training terminals 1. The method includes: causing the setting terminal 6 including setting information necessary for generating the simulation images to transmit the setting information to the training terminals 1; causing the training terminals 1 to receive the setting information from the setting terminal 6 and set the setting information; causing the training terminals 1 to transmit setting completion notification of the setting information to the setting terminal; and causing the training terminals 1 to start simulation training when the setting terminal 6 receives the completion notification from all the training terminals 1.

In addition, the simulation program 131 is an aircraft VR training program for causing the processor 14 (computer) of the training terminals 1 to execute the function of generating simulation images for performing simulation training in common VR space and providing the simulation images to the trainees 9 individually associated with the training terminals 1. The program causes the processor 14 to execute the functions of: receiving setting information necessary for generating the simulation images from the setting terminal 6 including the setting information and setting the setting information; transmitting setting completion notification of the setting information to the setting terminal 6; and receiving start notification of simulation training from the setting terminal 6 and starting simulation training.

Furthermore, the start program 641 is a VR training program for causing the processor 65 (computer) of the setting terminal 6 to execute the function of causing the training terminals 1 that provide simulation images for performing simulation training in common VR space to trainees 9 individually associated with the training terminals 1. The program causes the processor 65 to execute the functions of: transmitting setting information necessary for generating the simulation images to the training terminals 1; transmitting start notification of causing the training terminals 1 to start simulation training when setting completion notification of the setting information is received from all the training terminals 1.

With these configurations, each of the training terminals 1 generates the simulation image for performing simulation training in the common VR space. Thus, in each of the training terminals 1, it is necessary to set setting information necessary for generating the simulation image. Then, the setting terminal 6 transmits the setting information to the training terminals 1. Each of the training terminals 1 sets the setting information received from the setting terminal 6 as initial setting. Accordingly, the training terminals 1 can generate the simulation images in the common VR space. Since the trainees 9 do not need to perform initial setting in the associated training terminals 1, prediction of the contents of training by the trainees 9 is avoided so that training effects are thereby enhanced.

In addition, since the training terminals 1 in which setting of the setting information is completed transmit the completion notification to the setting terminal 6, the training terminals 1 do not need to check setting completion of the setting information in the training terminals 1 for each other, and one setting terminal 6 can check the setting completion. Further, since completion notification from all the training terminals 1 is collected in the setting terminal 6, the setting terminal 6 can easily determine whether to start training or not. When setting of the setting information is completed in all the training terminals 1, the setting terminal 6 transmits start notification to all the training terminals 1, and training starts. In this manner, checking of setting completion in all the training terminals 1 and a trigger for starting training are managed by one setting terminal 6, and thus, processing to training start can be thereby smoothly performed.

The simulation images include avatars of the trainees 9, and each of the training terminals 1 acquires position information of another avatar that is an avatar of the trainee 9 associated with another training terminal 1 in VR space after communication with the another training terminal 1 is established from the another training terminal 1, and generates the another avatar in the VR space in the simulation images based on position information.

With this configuration, each training terminal 1 acquires position information of another avatar from another training terminal 1. Thus, each training terminal 1 does not need to calculate position information of the another avatar, and thus, a calculation load can be reduced.

The simulation image includes avatars of the trainees 9 and the airframe 80 of the aircraft. The training terminals 1 generate an avatar present in the airframe 80 in the VR space based on position information with reference to a local coordinate system having an origin fixed at the airframe 80.

With this configuration, a relative positional relationship between the avatars and the airframe 80 can be appropriately maintained. That is, in the simulation images, the airframe 80 is movable. Similarly, the avatars are also movable. If each of the airframe 80 and the avatars is generated with reference to an absolute coordinate system in the VR space, positions of the airframe 80 and the avatars might be displaced. For example, the avatars might penetrate the airframe 80 or the avatars might float from the floor of the airframe 80. On the other hand, if the avatars are created with reference to the local coordinate system of the airframe 80, the relative positional relationship between the avatars and the airframe 80 can be appropriately maintained, and displacement as described above can be reduced.

In addition, the training terminals 1 transmit completion notification after preparation of the control sticks 31 or the controllers 3B (operation devices) to be used by trainees in simulation training is completed.

With this configuration, the completion notification indicates preparation completion of the operation device in addition to setting completion of the setting information. Accordingly, the setting terminal can start simulation training at an appropriate timing after preparation of the operation device is completed.

The simulation training is cooperative training performed by the trainees 9 individually associated with the training terminals 1.

The setting terminal 6 is a terminal that generates no simulation images.

With this configuration, the setting terminal 6 is a terminal different from the training terminals 1. That is, the setting terminal 6 is not a terminal provided for trainees.

### Other Embodiments

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the embodiment described above may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the VR training to which the VR training system 100 is applied is not limited to VR training using the helicopter. The VR training system 100 is also applicable to VR training using an aircraft other than the helicopter.

In a case where calculation capacity of the training terminal 1 of the pilot 91 and the training terminal 1 of the copilot 92 have margins, for example, the airframe calculating terminal 5 may be omitted, and each of the training terminal 1 of the pilot 91 and the training terminal 1 of the copilot 92 may calculate the amount of movement and the amount of change of posture of the airframe in the VR space. In this case, each of the training terminal 1 of the pilot 91 and the training terminal 1 of the copilot 92 is connected to its associated piloting device 3A. In this case, one training terminal 1 of the training terminals (specifically, one of the training terminals 1 of the pilot 91 and the copilot 92 whose piloting function is effective) functions as the airframe terminal for calculating a position and a posture of the airframe 80 of the aircraft in the VR space based on an operation input through the piloting device 3A.

Alternatively, the airframe calculating terminal 5 does not only calculate the amount of movement and the amount of change of posture of the airframe based on an operation input through the piloting devices 3A, but also may calculate a position and a posture of the airframe 80 in the VR space based on movement amount information. In this case, the airframe calculating terminal 5 is a terminal other than the training terminals 1 and serves as an airframe terminal that calculates a position and a posture of the airframe 80 of the aircraft in the VR space based on the operation input through the piloting devices 3A.

Alternatively, each of the training terminals 1 may acquire movement amount information from the airframe calculating terminal 5, and calculate a position and a posture of the airframe 80 in VR space based on the movement amount information.

The training terminals 1 of the pilot 91 and the copilot 92 generate avatars only whose heads are movable in order to reduce a calculation load, but the present disclosure is not limited to this. The training terminals 1 of the pilot 91 and the copilot 92 may generate avatars such that an action of the whole bodies of the trainees 9 are reflected, in a manner similar to the training terminals 1 of the hoist operator 93 and the descender 94.

The setting terminal 6 may not be a terminal different from the training terminals 1. The training terminals 1 may function as the setting terminal 6. That is, any one of the training terminals 1 may also function as the setting terminal 6. In this case, the aircraft VR training system 100 includes the training terminals 1 that generate simulation images for performing simulation training in common VR space and provide the simulation images to the trainees 9 associated with the training terminals 1, and the training terminal 1 that has the function as the setting terminal 6 including setting information necessary for generating the simulation images and generates a simulation image for performing simulation training in the common VR space and provides the simulation image to the associated trainee 9. For example, an instructor may serve as the copilot 92 and participate in training. In this case, the training terminal 1 of the copilot 92 has the function similar to that of the setting terminal 6. The instructor inputs setting information of initial setting to the training terminal 1 of the copilot 92, and the training terminal 1 of the copilot 92 transmits the setting information to another training terminal 1. When the another training terminal 1 completes setting of the setting information, all the other training terminals 1 transmit completion notification to the training terminal 1 of the copilot 92. When the training terminal 1 of the copilot 92 receives completion notification from all the other training terminals 1, the training terminal 1 of the copilot 92 transmits training start notification to all the other training terminals 1. The instructor monitors training of the other trainees 9 while participating in training as the copilot 92.

The setting terminal 6 may not have the function of monitoring training.

The trainees 9 are not limited to the pilot 91, the copilot 92, the hoist operator 93, and the descender 94. The trainees 9 may be two or three of these trainees. Alternatively, the trainees 9 may be persons other than the four described above. That is, any person who can perform cooperative training by using the VR training system 100 can be a trainee 9. For example, the trainees 9 may include a land staff (person who guides a helicopter on the ground surface), an air traffic controller, or a rescue requester.

As setting information of initial setting, initial positions of the trainees 9 in the VR space may be set. For example, if the trainee 9 is a land staff, a position of the trainee 9 on the ground surface in the VR space can be set.

In the flowcharts of FIGS. 7 and 8, steps may be omitted, the order of steps may be changed, or steps may be processed in parallel, or another step may be added, to the extent practicable.

In the flowchart of FIG. 7, the setting terminal 6 accepts an input of initial setting from an administrator, but the present application is not limited to this example. In the setting terminal 6, initial setting may be already made, and the setting terminal 6 may already have setting information on initial setting. In this case, the flowchart of FIG. 7 starts from step Sa3. Even in a configuration in which initial setting is input to the setting terminal 6, items regarding the initial setting may not be input. The setting terminal 6 may include initial setting items in which various types of setting information are preset beforehand, and the administrator may select one of the initial setting items.

In the flowchart of FIG. 8, in step Sb5, the training terminal 1 establishes communication with other training terminals 1, but the timing when communication with the other training terminals 1 is established is not limited to this example. For example, in step Sb1, while the training terminal 1 establishes communication with the setting terminal 6, communication with other training terminals 1 may be established. Although the training terminals 1 display self avatars in step Sb4, the timing of displaying the self avatars is not limited to this example. For example, the training terminals 1 may display the self avatars at the timing of displaying other avatars.

An image displayed by the VR display device 2 is not limited to a simulation image in a first-person viewpoint. For example, the VR display device 2 may display a simulation image in a third-person viewpoint.

The tracking system 4 can employ any technique as long as the tracking system 4 can track movement of the trainees 9. For example, the tracking system 4 may be an inside-out system.

The piloting devices 3A and the controllers 3B as operation devices can be appropriately changed depending on trainees and training contents.

The contents of operation that can be performed by the piloting devices 3A and the controllers 3B may be appropriately changed depending on trainees and training contents. For example, icons, for example, displayed by the VR display device 2 may be operated through the piloting devices 3A or the controllers 3B so that the piloting devices 3A or the controllers 3B function in a manner similar to the inputter 11.

The functions of the configuration disclosed in this embodiment may be executed by using an electric circuit or a processing circuit. The electric circuit or the processing circuit may be a main processor, a dedicated processor, an integrated circuit, an ASIC, a conventional electric circuit, a controller, or any combination thereof, configured or programmed to execute the disclosed functions. The processor or the controller is, for example, a processing circuit including a transistor and other circuits. In this disclosure, a circuit, a unit, a controller, or a means are hardware or are programmed in order to execute the functions described here. The hardware here is a hardware disclosed in this embodiment or a known hardware, configured or programmed to execute the functions disclosed in this embodiment. In a case where the hardware is a processor or a controller, a circuit, a means, or a unit is a combination of hardware and software, and software is used for constituting the hardware and/or the processor.

### DESCRIPTION OF REFERENCE CHARACTERS

- 100: VR training system

- 1: training terminal
- 131: simulation program (VR training program)
- 6: setting terminal
- 641: start program
- 3A: piloting device (operation device)
- 3B: controller (operation device)
- 91: pilot (trainee)
- 92: copilot (trainee)
- 93: hoist operator (trainee)
- 94: descender (trainee)

## Claims

1. An aircraft VR training system comprising:
training terminals that generates simulation images for simulation training in common VR space and provide the simulation images to trainees individually associated with the training terminals; and
a setting terminal including setting information for the simulation images, wherein
the setting terminal transmits the setting information to the training terminals,
the training terminals set the setting information received from the setting terminal and transmit setting completion notification of the setting information to the setting terminal, and
when the setting terminal receives the completion notification from all the training terminals, the setting terminal causes the training terminals to start the simulation training.

2. The aircraft VR training system according to claim 1, wherein
the simulation images include avatars of trainees, and
each of the training terminals, after establishing communication with another training terminal of the training terminals, acquires position information of another avatar that is an avatar of one of the trainees associated with the another training terminal in VR space from the another training terminal, and generates the another avatar in the VR space in the simulation image based on the position information.

3. The aircraft VR training system according to claim 1 or 2, wherein
the simulation images include avatars of trainees and an airframe of an aircraft, and
the training terminals generate at least one avatar of the avatars in the airframe in the VR space based on position information based on a local coordinate system having an origin fixed at the airframe.

4. The aircraft VR training system according to any one of claims 1 to 3, wherein
the training terminals transmit the completion notification after preparation of an operation device to be used by trainees in the simulation training is completed.

5. The aircraft VR training system according to any one of claims 1 to 4, wherein
the simulation training is cooperative training performed by trainees individually associated with the training terminals.

6. The aircraft VR training system according to any one of claims 1 to 5, wherein
the setting terminal is a terminal that generates no simulation image.

7. An aircraft VR training method for simulation training in which trainees individually associated with training terminals use simulation images in common VR space generated by the training terminals, the aircraft VR training method comprising:
transmitting setting information, held by a setting terminal, for the simulation images from the setting terminal to the training terminals;
setting the setting information by the training terminals, the setting information being received by the training terminals from the setting terminal;
transmitting, by the training terminals, setting completion notification of the setting information to the setting terminal; and
starting the simulation training by the training terminals when the setting terminal receives the completion notification from all the training terminals.

8. An aircraft VR training program for causing a computer of training terminals to execute the function of generating simulation images for simulation training in common VR space and providing the simulation images to trainees individually associated with the training terminals, the aircraft VR training program causing the computer to execute the functions of:
setting setting information for the simulation images, the setting information being received from a setting terminal including the setting information;
transmitting setting completion notification of the setting information to the setting terminal; and
starting the simulation training after receiving start notification of the simulation training from the setting terminal.

9. An aircraft VR training program for causing a computer of a setting terminal to execute the function of causing training terminals that provide simulation images for simulation training in common VR space to trainees individually associated with the training terminals to start the simulation training, the aircraft VR training program causing the computer to execute the functions of:
transmitting setting information for the simulation images to the training terminals; and
transmitting start notification of causing the training terminals to start the simulation training after receiving setting completion notification of the setting information from all the training terminals.
